# FASCICULE DE BREVET EUROPEEN

(11) **EP 3 941 803 B1**
(45) Date de publication et mention de la délivrance du brevet: **24.01.2024**
(21) Numéro de dépôt: 20707730.6
(22) Date de dépôt: 10.02.2020
(51) Int. Cl.: B62D 21/11, B62D 27/06

(54) **BERCEAU MODULAIRE AVEC PIECES D'ADAPTATION**
MODULARE WIEGE MIT ADAPTERTEILEN
MODULAR CRADLE WITH ADAPTER PARTS

(30) Priorité: 20.03.2019 FR 1902841
(43) Date de publication de la demande: 26.01.2022
(73) Titulaire: Stellantis Auto SAS, 78300 Poissy (FR)
(72) Inventeur: GATEAU, Pascal, 95620 PARMAIN (FR); STEVENS, Olivier, 78760 JOUARS PONTCHARTRAIN (FR)
(86) Numéro de dépôt international: PCT/FR2020/050223
(87) Numéro de publication internationale: WO 2020/188160

(56) Documents cités:
- EP-A2- 0 816 139
- DE-A1- 19 612 885
- FR-A1- 2 984 838
- US-A1- 2017 120 953

## Description

### Domaine technique

L'invention a trait au domaine des véhicules automobiles, plus particulièrement au domaine des structures avant des véhicules automobiles.

### Technique antérieure

Le document de brevet publié FR 3 046 590 A1 divulgue un berceau avant de véhicule automobile, comprenant classiquement un corps principal généralement plat destiné à être rigidement fixé à la structure du véhicule, et des interfaces de fixation à des triangles de suspension, à des profilés inférieurs communément appelés prolonges de berceau, et des profilés structurels longitudinaux supérieurs, communément appelés brancards. Ces interfaces sont formées intégralement avec le corps principal du berceau, le berceau étant en effet formé par un assemblage mécano-soudé de différents éléments métalliques du type tôle, profilé et embouti. Un tel berceau est en soi assez performant en termes de rapport rigidité/poids. Par contre, ce berceau, de par sa construction monobloc, requiert d'être remplacé en cas de déformation causée par une collision du véhicule. Aussi, il requiert d'être dimensionné et fabriqué de manière spécifique non seulement pour chaque modèle de véhicule mais aussi pour chaque variante d'un modèle de véhicule donné où le train avant présente des variations d'exécution.

Un berceau avant conforme au préambule de la revendication indépendante 1 est connu de FR 2 984 838 A1.

### Exposé de l'invention

L'invention a pour objectif de pallier au moins un des inconvénients de l'état de la technique susmentionné. Plus particulièrement, l'invention a pour objectif de proposer un berceau qui soit plus économique, notamment à l'occasion de sa réparation après collision du véhicule, et aussi lorsqu'un type de véhicule présente des variantes de configuration de pièces fixées audit berceau.

L'invention a pour objet un berceau avant pour véhicule automobile, comprenant un corps principal destiné à être rigidement fixé à la structure du véhicule ; des interfaces de fixation de triangles de suspension du train avant du véhicule, lesdites interfaces étant disposées sur le corps principal, latéralement de part et d'autre dudit corps principal ; remarquable en ce que les interfaces de fixation de triangles de suspension sont rapportées sur le corps principal. Selon l'invention, le berceau comprend, sur le corps principal, des interfaces de fixation à deux profilés longitudinaux inférieurs formant une voie basse de reprise d'effort en cas de choc avant, lesdites interfaces étant rapportées sur ledit corps principal.

Par « rapportées », on entend rattachées par fixation, par exemple au moyen de vis. Par latéralement de part et d'autre du corps principal on entend sur les côtés gauche et droit du corps principal.

Les interfaces de fixation peuvent comprendre un ou plusieurs des éléments suivants, selon toute combinaison : des orifices destinés à être traversés par des vis de fixation, des goujons de fixation et des orifices de réception d'éléments pivotants.

Selon un mode avantageux de l'invention, le berceau comprend, sur le corps principal, des interfaces de fixation à deux profilés structurels supérieurs du véhicule, lesdites interfaces étant rapportées sur ledit corps principal.

Selon un mode avantageux de l'invention, à chacun des deux côtés latéraux dudit berceau, les interfaces de fixation de triangles de suspension, de fixation à deux profilés longitudinaux inférieurs formant une voie basse de reprise d'effort et/ou de fixation à deux profilés structurel supérieurs sont formées sur une pièce d'adaptation avant.

Selon un mode avantageux de l'invention, les interfaces de fixation de triangles de suspension formées sur les pièces d'adaptation avant sont des interfaces de fixation avant desdits triangles; les interfaces de fixation de triangles de suspension étant également formées sur des pièces d'adaptation arrière, respectivement.

Selon un mode avantageux de l'invention, les pièces d'adaptation avant et, le cas échéant, arrière sont des pièces massives en métal forgé.

Selon un mode avantageux de l'invention, le corps principal comprend à chacun des deux côtés latéraux un logement avant recevant la pièce d'adaptation avant correspondante et, le cas échéant, un logement arrière recevant la pièce d'adaptation arrière correspondante.

Selon un mode avantageux de l'invention, le corps principal comprend deux emboutis principaux superposés et formant un volume intérieur, chacun des logements avant et, le cas échéant, arrière étant formé par lesdits emboutis dans ledit volume intérieur.

Avantageusement, le berceau comprend, en outre, un renfort disposé à l'avant et sous le corps principal, ledit renfort étant un embouti en forme de U avec deux branches généralement alignées avec les interfaces de fixation aux deux profilés longitudinaux inférieurs formant une voie basse de reprise d'effort. Les deux branches du U et les interfaces de fixation en question sont configurées pour coopérer mutuellement à la fixation aux deux profilés longitudinaux inférieurs formant une voie basse de reprise d'effort.

L'invention a également pour objet une structure de véhicule automobile, comprenant un berceau avant ; et un train avant avec deux triangles de suspension montés pivotants sur le berceau avant ; remarquable en ce que le berceau avant est selon l'invention, les triangles de suspension étant montés pivotant sur les interfaces de fixation desdits triangle, sur ledit berceau.

Selon un mode avantageux de l'invention, la structure comprend, en outre, deux profilés inférieurs formant une voie basse de reprise d'effort en cas de choc avant et s'étendant vers l'avant depuis des interfaces de fixation desdits profilés et rapportées au corps principal ; et/ou deux profilés structurels supérieurs s'étendant vers l'avant et des interfaces de fixation desdits profilés structurel supérieurs fixées auxdits profilés, lesdites interfaces étant rapportées au corps principal.

Les mesures de l'invention sont intéressantes en ce qu'elles procurent des avantages de modularité et de réparabilité. En effet, différentes configurations de train avant peuvent être rendues compatibles avec le corps principal en adaptant les interfaces de fixation dudit train avant, en l'occurrence en adaptant les pièces d'adaptation avant et éventuellement les pièces d'adaptation arrière. Cela est également vrai pour différentes configurations de profilés longitudinaux inférieurs formant la voie basse de reprise d'effort en cas de choc avant (prolonges de berceau avant) et aussi des profilés structurels longitudinaux (brancards). De plus, ces interfaces peuvent être rendues frangibles en cas de choc afin de préserver le corps principal.

D'autres caractéristiques et avantages de la présente invention seront mieux compris à l'aide de la description et des dessins.

### Brève description des dessins

[Fig 1] est une vue en perspective d'un berceau avant selon l'invention et d'une partie de structure avant de véhicule selon l'invention.
[Fig 2] est une vue de détail de la partie avant gauche du berceau de la figure 1.
[Fig 3] est une vue de détail du côté droit du berceau avant de la figure 1, sur lequel est monté pivotant un triangle de suspension du train avant du véhicule.

### Description détaillée

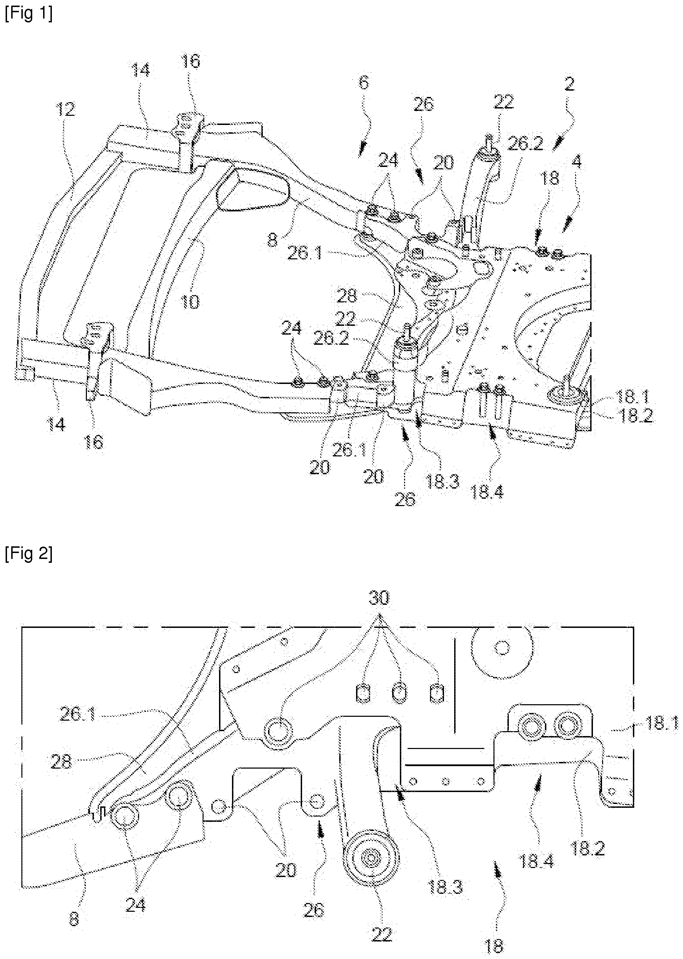

Les figures 1 et 2 illustrent un mode de réalisation de l'invention, étant entendu que de nombreuses variations sont possibles.

La figure 1 illustre une structure avant de véhicule automobile, plus particulièrement une partie basse de structure avant. La structure avant 2 de la figure 1 comprend, essentiellement, un berceau avant 4 et une voie basse 6 de reprise d'effort en cas de choc frontal avec le véhicule. La voie basse 6 comprend, essentiellement, deux profilés longitudinaux inférieurs 8 s'étendant vers l'avant depuis le berceau 4. Ces profilés sont communément appelés prolonges de berceau. Ces profilés longitudinaux inférieurs 8 sont en l'occurrence reliés entre eux à leurs extrémités avant par une traverse 10. Celle-ci est en l'occurrence rigidement fixée aux profilés longitudinaux inférieurs 8 de manière à former un assemblage rigide et monobloc. Une traverse inférieure avant de pare-chocs 12 est supportée par les profilés longitudinaux inférieurs 8 via des caissons déformables 14. Ceux-ci sont fixés à des platines de fixation 16 aux extrémités avant des profilés longitudinaux inférieurs 8.

Le berceau 4 comprend un corps principal 18 de forme généralement étendue, configuré pour être fixé au reste de la structure du véhicule automobile. Le corps principal 18 est en l'occurrence formé essentiellement par deux emboutis supérieur 18.1 et inférieur 18.2 superposés et assemblés l'un à l'autre pour former un volume intérieur. Comme cela est visible à la figure 1, le berceau 4 comprend également différentes interfaces de fixation à divers éléments du véhicule automobile. Il comprend ainsi des interfaces 20 de fixation à des triangles de suspension du train avant, des interfaces 22 de fixation à deux profilés structurels longitudinaux supérieurs (non représentés) communément appelés brancards, et des interfaces 24 de fixation aux deux profilés longitudinaux inférieurs 8. Ces interfaces 20, 22 et 24 comprennent avantageusement des orifices et/ou des goujons de fixation. En l'occurrence les interfaces 20 de fixation aux triangles de suspension du train avant et les interfaces 24 de fixation aux deux profilés longitudinaux inférieurs 8 sont formées par orifices de fixation sur un élément massif allongé et commun alors que les interfaces 22 de fixation aux deux profilés structurels longitudinaux supérieurs sont des goujons sur des éléments courbés, communément appelés cornes de berceau avant, de manière à rejoindre depuis une partie basse de la structure du véhicule les profilés ou brancards en question.

On peut observer à la figure 1 que les interfaces 20, 22 et 24 sont formées, de chaque côté latéral du véhicule, par une pièce d'adaptation avant 26. En effet, chacune de ces deux pièces 26 est d'un seul tenant et présente les interfaces 20, 22 et 24. Plus spécifiquement, chacun de ces deux pièces 26 comprend une partie généralement allongée et horizontale 26.1 formant les interfaces 20 et 24, et une partie généralement courbée et verticale 26.2 formant les interfaces 22. Les parties d'adaptation 26 sont rapportées sur le corps principal 18 du berceau 4. Par rapporter, conformément au sens commun en mécanique, on entend rattacher de manière rigide par une fixation réversible. A cet effet, les parties généralement allongée et horizontale 26.1 sont disposées dans des logements avant 18.3 formés dans le corps principal 18 et y sont fixées par vissage. Les pièces d'adaptation avant 26 sont avantageusement des pièces massives métalliques forgées.

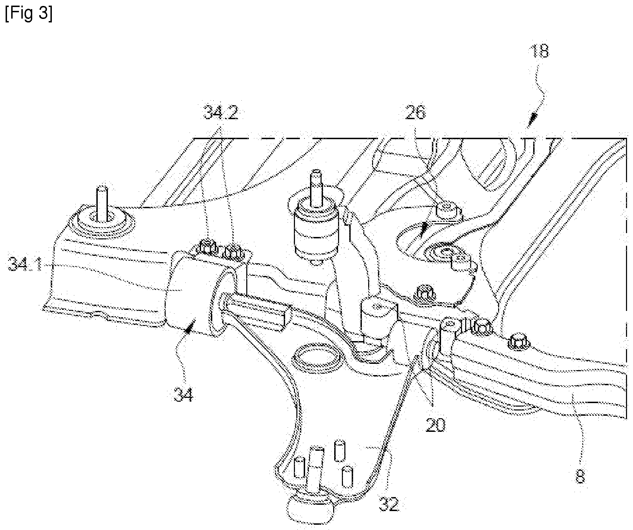

Toujours en référence à la figure 1, on peut observer que le corps principal 18 peut présenter également, de chaque côté latéral, un logement arrière 18.4 destiné à recevoir une pièce d'adaptation arrière (illustrée à la figure 3) destinée à servir d'interface de fixation arrière des triangles de suspension du train avant.

Il est intéressant de noter que les logements avant 18.3 et arrière 18.4 sont formés chacun par le volume intérieur du corps principal délimité par des bords découpés des emboutis supérieur 18.1 et inférieur 18.2, ces bords étant pourvus d'orifices recevant des vis de serrage. Les pièces d'adaptation avant 26 et arrière sont ainsi logées par insertion dans ces logements respectifs 18.3 et 18.4 et ensuite fixés de manière rigide par mise en place de vis de serrage traversant les emboutis supérieur 18.1 et inférieur 18.2 et les pièces d'adaptation.

Encore en référence à la figure 1, on peut observer que le berceau 4 peut également comprendre un renfort 28 disposé à l'avant et sous le corps principal 18, ce renfort 28 présentant un profil (vu du haut) en forme de U avec deux branches généralement alignées avec les parties généralement allongée et horizontale 26.1 des pièces d'adaptation avant 26 et avec les profilés longitudinaux inférieurs 8. Les vis assurant la fixation des profilés longitudinaux inférieurs 8 avec les interfaces de fixation 24 correspondantes sur pièces d'adaptation avant 26 traversent également le renfort 28. Le renfort 28 est généralement plat et est avantageusement un embouti avec le long de sa périphérie un ressaut de rigidification, ce ressaut présentant une hauteur réduite inférieure ou égale à 5mm.

La figure 2 est une vue de détail et du haut de la partie avant gauche du berceau 4 de la figure 1. On peut observer que la pièce d'adaptation avant 26 comprend également une interface 30 de fixation au corps principal 18 du berceau 4. Cette interface 30 comprend plusieurs orifices traversés par des vis s'étendant sur l'épaisseur du volume intérieur formé par le corps principal 18. Est plus particulièrement visible dans cette figure les emboutis supérieur 18.1 et inférieur 18.2 et les logements respectifs 18.3 et 18.4 du corps principal 18.

La figure 3 est une vue de détail de la partie avant droite du berceau de la figure 1, équipé d'un triangle de suspension du train avant. On peut y observer la manière dont le triangle de suspension 32 est monté de manière pivotante sur le berceau 4, plus précisément sur les interfaces de fixation. Le triangle 32 comprend, du côté du berceau, une première liaison pivotante, du type « silent-bloc » (élément élastomère antivibratoire), c'est-à-dire formée par un tube extérieur, un tube intérieur logé dans le tube extérieur et lié audit tube par un anneau de caoutchouc vulcanisé sur lesdits tubes, et un axe traversant le tube intérieur. Comme est visible à la figure 3, l'axe en question présente à ses deux extrémités des méplats rigidement fixés à l'interface de fixation 20 sur la pièce d'adaptation avant 26. On peut aussi observer que le triangle de suspension 32 comprend, toujours du côté du berceau, une deuxième liaison pivotante à une interface de fixation 34.1 sur une pièce d'adaptation arrière 34. Cette dernière comprend une interface de fixation 34.2 au corps principal 18 du berceau 4. La deuxième liaison pivotante est en l'occurrence réalisée par un doigt rigidement lié au triangle, inséré dans un « silent-bloc » (élément élastomère antivibratoire) logé dans une partie tubulaire de la pièce d'adaptation arrière 34, formant l'interface de fixation 34.1. La pièce d'adaptation arrière 34 est avantageusement réalisée en acier par soudage d'une portion de tube formant l'interface de fixation 34.1 au triangle de suspension, à une partie plus massive formant l'interface de fixation 34.2 au corps principal 18.

A la lumière de ce qui vient d'être décrit, on comprend que la structure avant inférieure qui vient d'être décrite, en particulier en relation avec le berceau, présente des avantages de modularité en ce que des pièces d'adaptation spécifiques à différents modèles et/ou variantes de véhicules peuvent être réalisées tout en conservant un corps principal de berceau unique et commun. Aussi, en cas de collision avant du véhicule, les profilés longitudinaux inférieurs et les pièces d'adaptation peuvent être aisément remplacés sans nécessairement requérir un replacement, potentiellement coûteux en main d'oeuvre, du corps principal du berceau.

## Revendications

1. Berceau avant (4) pour véhicule automobile, comprenant :
- un corps principal (18) destiné à être rigidement fixé à la structure (4) du véhicule ;
- des interfaces (20, 34.1) de fixation de triangles de suspension (32) du train avant du véhicule, lesdites interfaces étant disposées sur le corps principal (18), latéralement de part et d'autre dudit corps principal ;
les interfaces (20, 34.1) de fixation de triangles (32) de suspension étant rapportées sur le corps principal (18), **caractérisé en ce que** le berceau comprend, sur le corps principal (18), des interfaces (24) de fixation à deux profilés longitudinaux inférieurs (8) formant une voie basse (6) de reprise d'effort en cas de choc avant, lesdites interfaces étant rapportées sur ledit corps principal.

2. Berceau avant (4) selon l'une des revendications 1, **caractérisé en ce que** le berceau comprend, sur le corps principal (18), des interfaces (22) de fixation à deux profilés structurel supérieurs du véhicule, lesdites interfaces étant rapportées sur ledit corps principal.

3. Berceau avant (4) selon l'une des revendications 1 et 2, **caractérisé en ce que**, à chacun des deux côtés latéraux dudit berceau, les interfaces (20, 24, 22) de fixation de triangles de suspension (32), de fixation aux deux profilés longitudinaux inférieurs (8) formant une voie basse (6) de reprise d'effort et/ou de fixation à deux profilés structurels supérieurs sont formées sur une pièce d'adaptation avant (26).

4. Berceau avant (4) selon la revendication 3, **caractérisé en ce que** les interfaces (20) de fixation de triangles de suspension (32) formées sur les pièces d'adaptation avant (26) sont des interfaces de fixation avant desdits triangles ; les interfaces (34.1) de fixation de triangles de suspension étant également formées sur des pièces d'adaptation arrière (34), respectivement.

5. Berceau avant (4) selon l'une des revendications 3 et 4, **caractérisé en ce que** les pièces d'adaptation avant (26) et, le cas échéant, arrière (34) sont des pièces massive en métal forgé.

6. Berceau avant (4) selon l'une des revendications 3 à 5, **caractérisé en ce que** le corps principal (18) comprend à chacun des deux côtés latéraux un logement avant (18.3) recevant la pièce d'adaptation avant (26) correspondante et, le cas échéant, un logement arrière (18.4) recevant la pièce d'adaptation arrière (34) correspondante.

7. Berceau avant (4) selon la revendication 6, **caractérisé en ce que** le corps principal (18) comprend un embouti principal supérieur (18.1) et un embouti principal inférieur (18.2), lesdits emboutis principaux étant superposés et formant un volume intérieur, chacun des logements avant (18.3) et, le cas échéant, arrière (18.4) étant formé par lesdits emboutis principaux dans ledit volume intérieur.

8. Structure (2) de véhicule automobile, comprenant :
- un berceau avant (4) ; et
- un train avant avec deux triangles de suspension (32) montés pivotants sur le berceau avant (4) ;
**caractérisé en ce que** le berceau avant (4) est selon l'une des revendications 1 à 7, les triangles de suspension (32) étant montés pivotants sur les interfaces (20, 34) de fixation desdits triangles, sur ledit berceau.

9. Structure (2) selon la revendication 8, **caractérisée en ce que** le berceau avant (4) est selon l'une des revendications 1 et 2, ladite structure comprenant, en outre :
- deux profilés longitudinaux inférieurs (8) s'étendant vers l'avant depuis les interfaces (24) de fixation desdits profilés ; et/ou
- deux profilés structurels supérieurs s'étendant vers l'avant, les interfaces de fixation (22) desdits profilés structurels supérieurs étant fixées auxdits profilés.

## Patentansprüche

1. Vordere Wiege (4) für Kraftfahrzeuge, bestehend aus:
- einem Hauptkörper (18), der fest an der Fahrzeugstruktur (4) befestigt werden soll;
- Schnittstellen (20, 34.1) zur Befestigung von Aufhängungsdreiecken (32) des vorderen Zuges des Fahrzeugs, wobei die Schnittstellen am Hauptkörper (18) seitlich beiderseits des Hauptkörpers angeordnet sind;
Schnittstellen (20, 34.1) zur Befestigung von Aufhängungsdreiecken (32), die auf den Hauptkörper (18) aufgesetzt sind, **dadurch gekennzeichnet, dass** die Wiege auf dem Hauptkörper (18) Befestigungsschnittstellen (24) mit zwei unteren Längsprofilen (8) umfasst, die eine untere Bahn (6) zur Kraftaufnahme bei einem Frontalaufprall bilden, wobei die Schnittstellen auf den Hauptkörper aufgesetzt sind.

2. Vorderes Gestell (4) nach einem der Ansprüche 1, **dadurch gekennzeichnet, dass** das Gestell am Hauptkörper (18) Befestigungsflächen (22) an zwei oberen Strukturprofilen des Fahrzeugs aufweist, wobei die genannten Flächen an dem Hauptkörper angebracht sind.

3. Vorderes Gestell (4) nach einem der Ansprüche 1 und 2, **dadurch gekennzeichnet, dass** an jeder der beiden Seitenseiten des Gestells die Schnittstellen (20, 24, 22) zur Befestigung von Aufhängungsdreiecken (32), zur Befestigung an den beiden unteren Längsprofilen (8), die eine untere Kraftaufnahmebahn (6) bilden, und/oder zur Befestigung an zwei oberen Strukturprofilen an einem vorderen Anpassungsteil (26) ausgebildet sind.

4. Vorderes Gestell (4) nach Anspruch 3, **dadurch gekennzeichnet, dass** die Befestigungsschnittstellen (20) für Aufhängungsdreiecke (32), die an den vorderen Adapterteilen (26) ausgebildet sind, vordere Befestigungsschnittstellen der Dreiecke sind; wobei die Befestigungsschnittstellen (34.1) für Aufhängungsdreiecke ebenfalls an den hinteren Adapterteilen (34) ausgebildet sind.

5. Vorder-Wiege (4) nach einem der Ansprüche 3 und 4, **dadurch gekennzeichnet, dass** die vorderen (26) und gegebenenfalls hinteren (34) Adapterteile massive Schmiedemetallteile sind.

6. Vorder-Wiege (4) nach einem der Ansprüche 3 bis 5, **dadurch gekennzeichnet, dass** der Hauptkörper (18) an beiden Seiten je eine das entsprechende vordere Adapterteil (26) aufnehmende vordere Aufnahme (18.3) und gegebenenfalls eine das entsprechende hintere Adapterteil (34) aufnehmende hintere Aufnahme (18.4) aufweist.

7. Vorderes Gestell (4) nach Anspruch 6, **dadurch gekennzeichnet, dass** der Hauptkörper (18) einen oberen Hauptstempel (18.1) und einen unteren Hauptstempel (18.2) umfasst, wobei die Hauptstempel übereinander liegen und ein Innenvolumen bilden, wobei jede der vorderen (18.3) und gegebenenfalls hinteren (18.4) Aufnahmen durch die Hauptstempel in dem Innenvolumen gebildet ist.

8. Fahrzeugstruktur (2), bestehend aus:
- eine vordere Wiege (4) und
- einem vorderen Zug mit zwei Aufhängungsdreiecken (32), die schwenkbar am vorderen Gestell (4) angebracht sind;
**dadurch gekennzeichnet, dass** die vordere Wiege (4) nach einem der Ansprüche 1 bis 7 ausgebildet ist, wobei die Aufhängungsdreiecke (32) schwenkbar an den Schnittstellen (20, 34) zur Befestigung der Dreiecke an der Wiege angebracht sind.

9. Struktur (2) nach Anspruch 8, **dadurch gekennzeichnet, dass** das vordere Gestell (4) nach einem der Ansprüche 1 und 2 ist, wobei die Struktur ferner umfasst:
- zwei untere Längsprofile (8), die sich von den Befestigungsflächen (24) dieser Profile nach vorne erstrecken, und/oder
- zwei sich nach vorne erstreckende obere Strukturprofile, wobei die Befestigungsschnittstellen (22) der oberen Strukturprofile an den Profilen befestigt sind.

## Claims

1. Front cradle (4) for motor vehicles, comprising:
- a main body (18) intended to be rigidly fixed to the structure (4) of the vehicle;
- interfaces (20, 34.1) for fixing suspension triangles (32) of the front axle assembly of the vehicle, said interfaces being arranged on the main body (18), laterally on either side of said main body;
the interfaces (20, 34.1) for fixing suspension triangles (32) being attached to the main body (18), **characterized in that** the cradle comprises, on the main body (18), interfaces (24) for attachment to two lower longitudinal sections (8) forming a low path (6) for taking up force in the event of a front impact, said interfaces being attached to said main body.

2. Front cradle (4) according to claim 1, **characterized in that** the cradle comprises, on the main body (18), fastening interfaces (22) with two upper structural sections of the vehicle, the said interfaces being attached to the said main body.

3. Front cradle (4) according to one of claims 1 and 2, **characterized in that**, on each of the two lateral sides of the said cradle, the interfaces (20, 24, 22) for fixing suspension triangles (32), for fixing to the two lower longitudinal sections (8) forming a low path (6) for taking up force and/or for fixing to two upper structural sections are formed on a front fitting part (26).

4. Front cradle (4) according to claim 3, **characterized in that** the interfaces (20) for fixing suspension triangles (32) formed on the front adaptation pieces (26) are interfaces for fixing the said triangles front; the interfaces (34.1) for fixing suspension triangles being also formed on rear adaptation pieces (34), respectively.

5. Front cradle (4) according to one of claims 3 and 4, **characterized in that** the front (26) and, where appropriate, rear (34) adaptation pieces are solid forged metal pieces.

6. Front cradle (4) according to one of claims 3 to 5, **characterized in that** the main body (18) comprises, on each of the two lateral sides, a front housing (18.3) receiving the corresponding front adaptation piece (26) and, where appropriate, a rear housing (18.4) receiving the corresponding rear adaptation piece (34).

7. Front cradle (4) according to claim 6, **characterized in that** the main body (18) comprises an upper main press-formed portion (18.1) and a lower main press-formed portion (18.2), said main press-formed portions being superposed and forming an internal volume, each of the front (18.3) and, where appropriate, rear (18.4) housings being formed by said main press-formed portions in said internal volume.

8. Motor vehicle structure (2), comprising:
- a front cradle (4); and
- a nose gear with two suspension triangles (32) pivotally mounted on the front cradle (4);
**characterized in that** the front cradle (4) is according to one of claims 1 to 7, the suspension triangles (32) being pivotally mounted on the fastening interfaces (20, 34) of said triangles, on said cradle.

9. Structure (2) according to claim 8, **characterized in that** the front cradle (4) is according to either of claims 1 and 2, the said structure further comprising:
- two lower longitudinal sections (8) extending forwards from the fastening interfaces (24) of said sections; and/or
- two upper structural profiles extending forwards, the fixing interfaces (22) of said upper structural profiles being fixed to said profiles.
